**Europäisches Patentamt**

**European Patent Office**

**Office européen des brevets**

(11) Veröffentlichungsnummer: **0 191 153**
**A2**

# (12) EUROPÄISCHE PATENTANMELDUNG

(21) Anmeldenummer: 85114688.6

(22) Anmeldetag: 19.11.85

(51) Int. Cl.⁴: **B 01 D 50/00**, F 04 C 29/02

(30) Priorität: 22.11.84 DE 3442626

(43) Veröffentlichungstag der Anmeldung: 20.08.86
Patentblatt 86/34

(84) Benannte Vertragsstaaten: **BE DE FR GB IT SE**

(71) Anmelder: **Rotorcomp Verdichter GmbH, Wolfratshauserstrasse 34, D-8000 München 70 (DE)**

(72) Erfinder: **Gerdau, Alfred, Kolumbusstrasse 16, D-8000 München 90 (DE)**

(74) Vertreter: **Hering, Hartmut, Dipl.-Ing., Patentanwälte Berendt, Leyh & Hering Innere-Wiener-Strasse 20, D-8000 München 80 (DE)**

(54) **Fluidabscheider, insbesondere Gas/Flüssigkeit-Abscheider.**

(57) Nach der Erfindung ist in einem Fluidabscheider (20, 20', 20'', 20'''), der insbesondere als Öl/Luft-Abscheider in einer Druckgasanlage dient, zwischen einer Grobabscheideeinrichtung (9, 41) und einer Feinabscheideeinrichtung (10) in Fluidströmungsrichtung durch den Fluidabscheider eine Fluidleiteinrichtung (26, 26', 26'') angeordnet, auf die der Fluidstrom vor dem Erreichen der Feinabscheideeinrichtung (10) auftrifft, um in einer Art Zwischenstufe nochmals eine Abscheidung von Flüssigkeit bzw. Öl zu ermöglichen. Ferner beschleunigt die Fluidleiteinrichtung (26, 26', 26'') auch den Fluidstrom vor dem Erreichen der Feinabscheideeinrichtung (10), so daß er durch die Volumenvergrößerung um die Feinabscheideeinrichtung (10) zur Erzielung einer ausreichenden Verweilzeit im Bereich der Feinabscheideeinrichtung (10) verlangsamt werden kann, wodurch die Abscheideeffizienz noch weiter verbessert wird. Insbesondere ermöglicht die Fluidleiteinrichtung (26, 26', 26'') aber auch, daß der Fluidstrom von der abgeschiedenen Flüssigkeit weggelenkt wird und sich daher beide Ströme nicht kreuzen, so daß der Fluidstrom vor dem Erreichen der Feinabscheideeinrichtung (10) nicht wieder bereits zuvor abgeschiedene Flüssigkeit mitreissen kann. Hierdurch wird zum einen die Effizienz des Fluidabscheiders wesentlich verbessert und zum anderen erhält man auch kleinere Abmessungen und eine gedrängte Bauweise eines solchen Fluidabscheiders.

Fluidabscheider, insbesondere Gas/Flüssigkeit-Abscheider

Beschreibung

Die Erfindung betrifft einen Fluidabscheider, insbesondere einen Gas/Flüssigkeit-Abscheider, wie beispielsweise einen Öl/Luft-Abscheider für eine Druckgasanlage gemäß dem Oberbegriff von Anspruch 1.

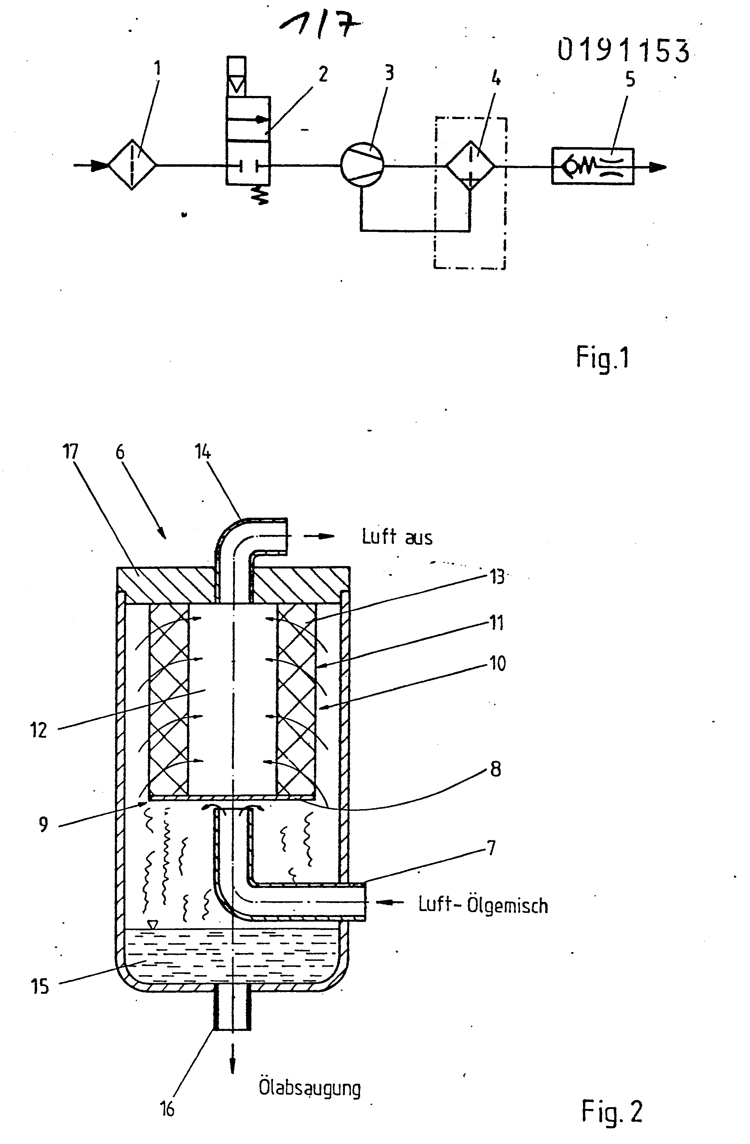

Bei einer üblichen und in Figur 1 der Zeichnung schematisch dargestellten Druckgasanlage zur Erzeugung von Druckgas beispielsweise wird bei der Kompression in einem Kompressor, wie einem Schraubenkompressor, dem zu verdichtenden Medium eine Flüssigkeit, wie Öl, beigemischt, die nach der Kompression in einem Abscheidesystem vor der Lieferung des Druckgases an den Verbraucher wieder abgetrennt wird. Als Abscheidersystem wird üblicherweise ein Fluidabscheider, insbesondere ein Gas/Flüssigkeit-Abscheider und speziell beim vorstehend beschriebenen Beispiel ein Öl/Luft-Abscheider der gattungsgemäßen Art verwendet. Ein solcher Abscheider steht hinsichtlich des Flüssigkeitskreislaufes mit dem Kompressor in Form eines Kreislaufes in Verbindung. Üblicherweise, wie auch in Figur 2 der beiliegenden Zeichnung dargestellt ist, umfaßt ein solcher Abscheider eine Grobabscheideeinrichtung und eine Feinabscheideeinrichtung. Beide sind in einem kesselartigen Abscheidergehäuse untergebracht, das vorzugsweise kreiszylindrisch ausgebildet ist. Der in den Abscheider eintretende und zu behandelnde Fluidstrom, der von einem Gemisch aus Flüssigkeit und Gas, wie Öl und Luft, gebildet wird, wird vom Kompressorausgang über einen Fluideintritt in das Gehäuse eingeleitet und auf eine Pralleinrichtung gerichtet, die eine Grobabscheideeinrichtung bildet. Der Bodenbereich des Gehäuses bildet einen Flüssigkeitssammelraum, wie einen Ölsammelraum, in dem sich die abgeschiedene Flüssigkeit von der Grobabscheideeinrichtung und der in Fluidströmungsrichtung im Abscheider der Grobabscheideeinrichtung nachgeschalteten Feinabscheideeinrichtung sammelt. Als Grobabscheideeinrichtung wird üblicherweise eine im Gehäuse etwa mittig angeordnete, kreisförmige Prallplatte verwendet und die Feinabscheideeinrichtung ist oberhalb der Prallplatte koaxial zu dieser angeordnet. Aus dem Innenraum der Feinabscheideeinrichtung wird dann das im Abscheider behandelte Gas durch Absaugung in Richtung zum Verbraucher aus dem Abscheider abgeleitet. Das in den Abscheider eingeleitete, aus Gas und Flüssigkeit bestehende Gemisch, trifft auf die Pralleinrichtung der Grobabscheideeinrichtung auf und die während des Kompressionsvorgangs mitgerissenen Flüssigkeitströpfchen werden hierbei abgeschieden und fallen von der Pralleinrichtung in Form einer Prallplatte zum Flüssigkeitssammelraum nach unten. Der die Grobabscheideeinrichtung verlassende Fluidstrom steigt dann zur Feinabscheideeinrichtung nach oben, geht durch deren Wandung und tritt in den Innenraum der Feinabscheideeinrichtung ein.

Bei einem solchen Fluidabscheider kreuzt die von der Grobabscheideeinrichtung zur Feinabscheideeinrichtung aufsteigende Fluidströmung sich mit der Flüssigkeit, die in der Feinabscheideeinrichtung abgeschieden wird und in den darunterliegenden Flüssigkeitssammelraum fällt.

Um eine ausreichende Abscheidungseffizienz für die Flüssigkeit zu gewährleisten, hat man daher bisher den Fluidabscheider im Durchmesser relativ groß gehalten, um die von der Grobabscheideeinrichtung aufsteigende Fluidströmung auf eine sehr geringe Strömungsgeschwindigkeit zu verlangsamen, so daß vermieden wird, daß sich die vorstehend beschriebenen kreuzenden Ströme von Flüssigkeit und Fluid so beeinflussen, daß der zur Feinabscheideeinrichtung aufsteigende Fluidstrom so wenig wie möglich bereits abgeschiedene. Flüssigkeit mitreißt. Durch die relativ großen Abmessungen des Fluidabscheiders benötigt man daher insbesondere im Vergleich zum Kompressor einen großen Platzbedarf für den Fluidabscheider. Auch kommt noch hinzu, daß im Inneren des Fluidabscheiders das vom Kompressor eingeleitete Fluid unter dem Kompressionsdruck steht, so daß der Fluidabscheider insgesamt ausreichend druckfest ausgelegt sein muß. Hiermit verbunden ist auch ein beträchtliches Eigengewicht des Fluidabscheiders sowie ein nicht übersehbarer Materialaufwand für die Herstellung desselben.

Die Erfindung zielt daher darauf ab, einen Fluidabscheider der gattungsgemäßen Art derart weiterzubilden, daß man mindestens bei gleichbleibender, wenn nicht sogar gesteigerter Abscheideeffizienz eine gedrängte und daher kompakte Bauweise erhält. Vorzugsweise soll hierdurch eine Gewichtsreduzierung des Fluidabscheiders sowie eine Herstellungsvereinfachung und darüberhinaus auch eine Materialersparnis erzielt werden, ohne eine Einbuße an der Flüssigkeitsabscheideeffizienz in Kauf nehmen zu müssen.

Nach der Erfindung zeichnet sich hierzu ein Fluidabscheider durch die Merkmale des Anspruchs 1 aus.

Beim erfindungsgemäßen Fluidabscheider ist in Fluiddurchströmungsrichtung des Abscheiders zwischen der Grobabscheideeinrichtung und der Feinabscheideeinrichtung insbesondere in der Nähe der Feinabscheideeinrichtung eine
Fluidleiteinrichtung vorgesehen. Diese Fluidleiteinrichtung ist derart beschaffen und ausgelegt, daß der die
Grobabscheideeinrichtung verlassende Fluidstrom auf dieselbe auftrifft, und zwar vor Erreichen der Feinabscheideeinrichtung, um eine weitere Zwischenabscheidung der
Flüssigkeit zu ermöglichen, der Fluidstrom ferner vor
Erreichen der Feinabscheideeinrichtung beschleunigt wird
und gleichzeitig auch von der abgeschiedenen Flüssigkeit
der Feinabscheideeinrichtung und jener Flüssigkeit weggelenkt wird, die in der Fluidleiteinrichtung abgeschieden wird. Durch diese erfindungsgemäßen Maßnahmen wird
auf konstruktiv unkomplizierte Weise gewährleistet, daß
sich der behandelte Fluidstrom nicht mit der abgeschiedenen Flüssigkeit kreuzt, so daß die Abmessungen eines
solchen Fluidabscheiders reduziert werden können und man
eine gedrängte Bauweise erhält. Hierdurch wird ein geringerer Platzbedarf ermöglicht und man erhält einen äußerst
effizient arbeitenden Fluidabscheider in überraschend gedrängter Bauweise. Ferner wird beim erfindungsgemäßen
Fluidabscheider durch die Anordnung der Fluidleiteinrichtung auch verhindert, daß die dort abgeschiedene Flüssigkeit zur Grobabscheideeinrichtung zurückgelangen kann,
da sie nämlich direkt von der Fluidleiteinrichtung in
den Flüssigkeitssammelraum fällt. Mit der erfindungsgemäßen Fluidleiteinrichtung wird also nicht nur wirksam
ein nochmaliges Mitreißen von bereits abgeschiedener
Flüssigkeit verhindert, sondern die Fluidleiteinrichtung
ermöglicht auch eine weitere Zwischenabscheidung vor dem
Erreichen der Feinabscheideeinrichtung, so daß trotz
einer gedrängten Bauweise sogar ein verbesserter Abscheidungswirkungsgrad eines solchen Fluidabscheiders erreicht
werden kann.

- *5* -   0191153

Weitere vorteilhafte Ausgestaltungen der Erfindung sind
in den weiteren Ansprüchen wiedergegeben.

Wie in den Ansprüchen 2 und 3 angegeben ist, wird der
Fluidstrom durch die Fluidleiteinrichtung aufgeteilt,
vorzugsweise in zwei radial divergierende Teilströme,
die dann wieder vor dem Durchgang durch die Feinabscheideeinrichtung vereinigt werden und zwar zweckmäßigerweise dadurch, daß sie aufeinander gerichtet werden und hierdurch verwirbelt werden. Auf diese Weise
kann nicht nur die Verweilzeit des Fluidstroms im Bereich der Feinabscheideeinrichtung erhöht werden, wodurch
sich eine vollständigere Abscheidung ergibt, sondern
gleichzeitig wird auch bewirkt, daß die im Fluidstrom
nebelartig enthaltene Flüssigkeit durch die Verwirbelung
zu größeren Flüssigkeitströpfchen vor dem Durchgang
durch die Feinabscheideeinrichtung vereinigt wird. Hierdurch läßt sich auch die Abscheidungseffizienz der Feinabscheideeinrichtung verbessern, ohne daß man die Abmessungen des Fluidabscheiders insgesamt vergrößern zu
braucht.

Wie in den Ansprüchen 4 und 5 angegeben ist, ermöglicht
die erfindungsgemäße Auslegung des Fluidabscheiders
auch, daß das aus dem Innenraum der Feinabscheideeinrichtung abzusaugende Gas, das dem nachgeschalteten
Verbraucher zuzuführen ist, entweder an der Oberseite
des Fluidabscheiders oder an der Unterseite desselben
abgezogen werden kann. Hierdurch kann man anlagetechnische Vereinfachungen durch die freie Wahl einer von
beiden Abzugsmöglichkeiten erreichen.

In den Ansprüchen 6 und 7 ist eine Weiterbildung nach
der Erfindung angegeben, bei der die Grobabscheideeinrichtung in einem ersten Hohlzylinder und die Feinabscheideeinrichtung in einem zweiten Hohlzylinder angeordnet sind, wobei die Enden beider Hohlzylinder in
Form von kommunizierenden Röhren miteinander verbunden
sind. Bei einer solchen Auslegung erreicht man, daß man
für die Hohlzylinder der Feinabscheideeinrichtung und
der Grobabscheideeinrichtung kleinere Abmessungen als
bisher üblich verwenden kann, so daß man nicht nur eine
Materialreduzierung bei der Herstellung, sondern auch
eine Gewichtsersparnis erzielt. Eine weitere Vereinfachung hinsichtlich des Aufbaus ergibt sich dadurch, daß
man einen Teil der Innenwand des ersten Hohlzylinders
als Pralleinrichtung für die Grobabscheideeinrichtung
nutzen kann, so daß man hierfür kein gesondertes Bauteil,
wie eine Prallplatte oder dergleichen, benötigt. Gleichzeitig gestattet aber eine solche Auslegung durch die
kommunizierende Röhrenverbindung auch, daß der untere
Bereich beider Hohlzylinder zur Bildung des Flüssigkeitssammelraums dienen und gleichzeitig eine Flüssigkeitssperre bilden kann, so daß die in den jeweiligen Hohlzylinder eintretenden Fluidströme nur über einen vorbestimmten Strömungsweg durch den Abscheider gehen.

Gemäß den Ansprüchen 8 und 9 ist der erfindungsgemäße
Fluidabscheider so ausgebildet, daß die beiden Hohlzylinder in einem Abstand voneinander angeordnet sind
und an ihren Enden über Zwischenabschnitte strömungsleitend miteinander verbunden sind. Hierbei wird der
die Grobabscheideeinrichtung verlassende Fluidstrom
über das obere Ende des ersten Hohlzylinders, der die
Grobabscheideeinrichtung enthält, über den Zwischenabschnitt zu der Feinabscheideeinrichtung geleitet, wobei
in einem Abstand von der Feinabscheideeinrichtung und
in einem Abstand von der Einmündungsöffnung des Zwischenabschnittes die Fluidleiteinrichtung angeordnet ist, so daß der die Fluidleiteinrichtung verlassende Fluidstrom wenigstens zur oberen Hälfte der Feinabscheideeinrichtung gelangt, was bedeutet, daß der Einmündungsbereich dieses Zwischenabschnittes in dem zweiten Hohlzylinder· etwa der oberen Hälfte der Feinabscheideeinrichtung gegenüberliegt. Bei einer solchen wie zuvor beschriebenen Auslegung des erfindungsgemäßen Fluidabscheiders kann dann zweckmäßigerweise gemäß Anspruch 10 die Fluidleiteinrichtung von einem in Form eines Halbkreises gebogenen Blech gebildet werden, das konzentrisch um die Feinabscheideeinrichtung angeordnet ist.

Um die Kontaktfläche des auf die Fluidleiteinrichtung auftreffenden Fluidstromes und hierdurch den Abscheidewirkungsgrad zu verbessern, ist zweckmäßigerweise der Einmündungsbereich dieses Zwischenabschnittes in den zweiten Hohlzylinder im Querschnitt erweitert.

Zur Erhöhung der Verweilzeit und zur Verbesserung des Wirkungsgrades der Feinabscheideeinrichtung ist in den Ansprüchen 12 und 13 eine solche Auslegung des Fluidabscheiders angegeben, daß der von der Fluidleiteinrichtung gelenkte Fluidstrom nicht in Form einer aufsteigenden Strömung in der Feinabscheideeinrichtung entlangstreicht, sondern in einem Fallstrom die Oberfläche der Feinabscheideeinrichtung überstreicht, wodurch auch gewährleistet wird, daß insbesondere die Längserstreckung der Feinabscheideeinrichtung nahezu vollständig zur Flüssigkeitsabscheidung genutzt werden kann. Um dies zu erreichen, ist die Fluidleiteinrichtung in Form eines Ringes ausgebildet, der konzentrisch um die Feinabscheideeinrichtung angeordnet ist und an seinem tiefer liegenden Ende an der Innenwand des zweiten Hohlzylinders befestigt ist. Um ein unbehindertes Abstropfen der an der Fluidleiteinrichtung abgeschiedenen Flüssigkeit zu ermöglichen, sind in einem zur Befestigung am zweiten Hohlzylinder dienenden Ringflansch Auslaßöffnungen vorgesehen, durch die die abgeschiedene Flüssigkeit direkt in den darunterliegenden Flüssigkeitssammelraum abtropfen kann. Diese Flüssigkeit kommt hierbei nicht mehr in Berührung mit dem im Abscheider zu behandelnden Fluidstrom.

Nach den Ansprüchen 14 und 15 sind vorteilhafte Einzelheiten hinsichtlich der konkreten Bemessung und Auslegung des erfindungsgemäßen Fluidabscheiders angegeben. Hieraus läßt sich ersehen, daß man eine äußerst variable Bemessungskombinationsvielfalt bei der erfindungsgemässen Auslegung des Fluidabscheiders erreichen kann, so daß der Fluidabscheider ohne Schwierigkeiten an die jeweils geforderten speziellen Gegebenheiten auch hinsichtlich seinen Abmessungen angepaßt werden kann.

Gemäß Anspruch 16 wird in einer weiteren Ausführungsvariante des Fluidabscheiders die Grobabscheideeinrichtung als Vorabscheideeinrichtung in Form eines gesonderten Bauteils ausgeführt, wobei diese Vorabscheideeinrichtung eine an sich übliche Einrichtung, wie ein Zyklon oder dergleichen, sein kann. Diese Vorabscheideeinrichtung steht über Verbindungsleitungen mit der Feinabscheideeinrichtung und der Fluidlenkeinrichtung sowie mit dem Sammelraum der Feinabscheideeinrichtung in Verbindung.

Gemäß einer weiteren Ausführungsvariante nach Anspruch 17 werden die beiden Hohlzylinder für die Grobabscheideeinrichtung und die Feinabscheideeinrichtung konzentrisch

- 9 -

0191153

zueinander ineinandergeschachtelt angeordnet, wodurch man einen äußerst geringen Platzbedarf für den Fluidabscheider erreicht, sowie auch fertigungstechnische Vereinfachungen, ohne daß hierdurch die Abscheideeffizienz des Fluidabscheiders beeinträchtigt wird.

Der Stand der Technik sowie die Erfindung werden nachstehend an Beispielen unter Bezugnahme auf die beigefügte Zeichnung näher erläutert, wobei als Anwendungsbeispiel eines Fluidabscheiders ein Öl/Luft-Abscheider für eine Druckgasanlage gewählt ist, ohne daß jedoch die Erfindung auf dieses spezielle Anwendungsgebiet beschränkt ist. In der Zeichnung zeigt:

Figur 1    ein Blockdiagramm einer Druckgasanlage mit einem Abscheidersystem,

Figur 2    eine Längsschnittansicht eines Fluidabscheiders einer üblichen Bauform zur Verdeutlichung des Standes der Technik,

Figur 3    eine Längsschnittansicht einer Ausführungsform eines erfindungsgemäßen Fluidabscheiders,

Figur 4    eine Schnittansicht des Fluidabscheiders längs der Linie IV-IV in Figur 3,

Figur 5    eine Längsschnittansicht einer Ausführungsvariante eines Fluidabscheiders,

Figur 6    eine Schnittansicht des Fluidabscheiders von Figur 5 längs der Linie VI-VI in Figur 5,

Figur 7    eine weitere Ausbildungsform eines Fluidabscheiders nach der Erfindung in einer
Längsschnittansicht,

Figur 8    eine Schnittansicht des Fluidabscheiders
nach Figur 7 längs der Linie VIII-VIII in
Figur 7,

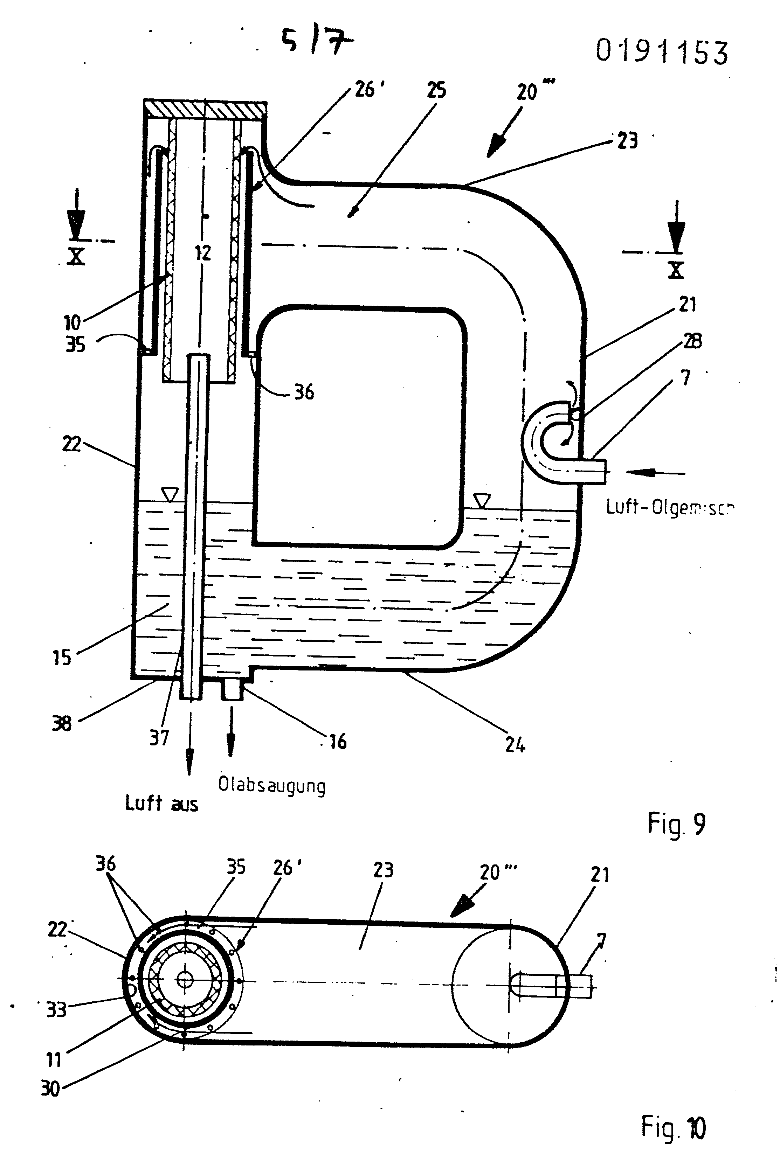

Figur 9    eine abgewandelte Ausführungsform eines
Fluidabscheiders nach der Erfindung in einer
Längsschnittdarstellung,

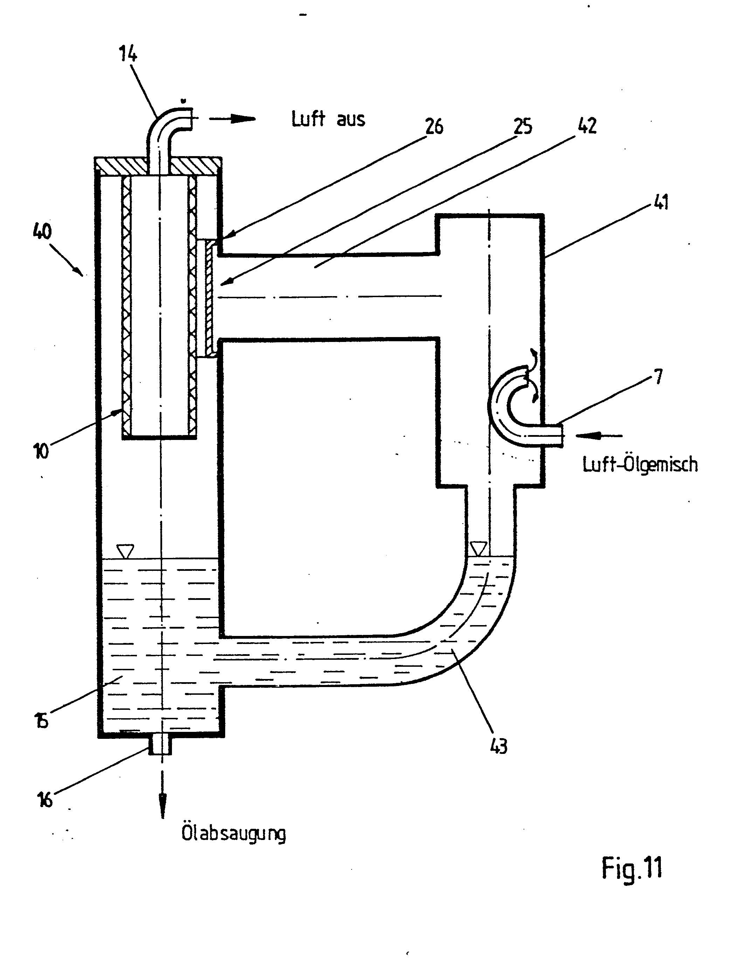

Figur 10   eine Schnittansicht des Fluidabscheiders
nach Figur 9 längs der Linie X-X in Figur 9,

Figur 11   eine schematische Ansicht einer weiteren
Ausführungsvariante eines erfindungsgemäßen
Fluidabscheiders,·

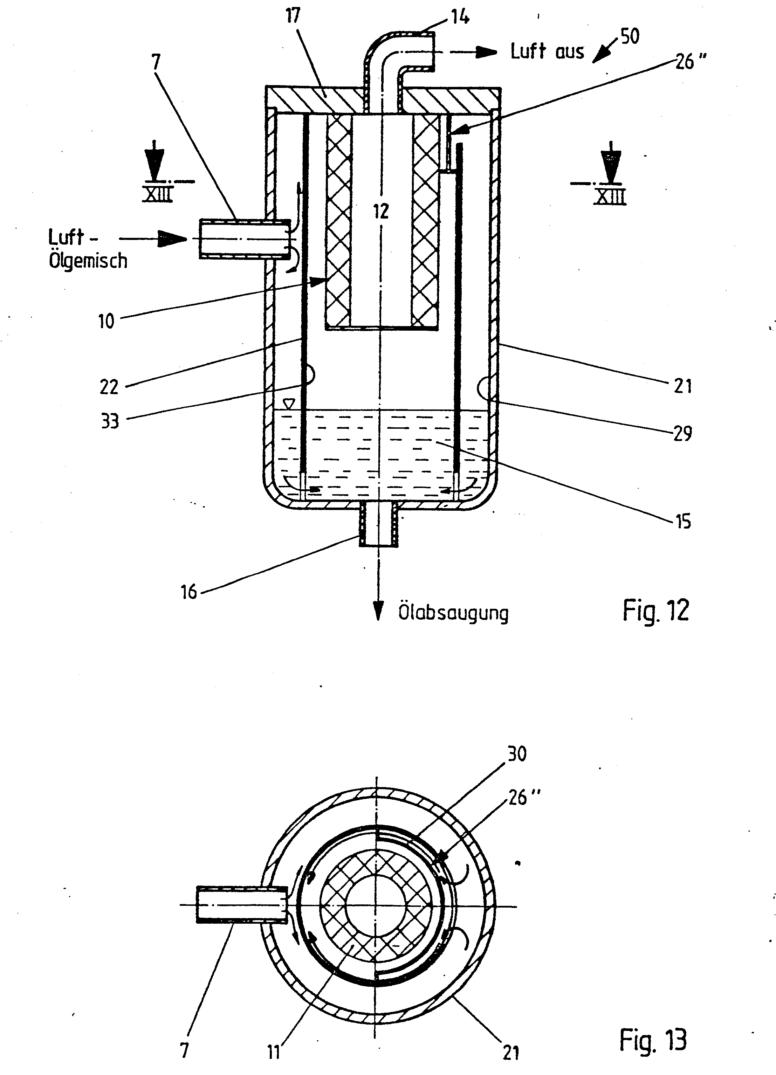

Figur 12   eine Längsschnittansicht einer alternativen
Ausführungsform eines Fluidabscheiders nach
der Erfindung, und

Figur 13   eine Schnittansicht des Fluidabscheiders
nach Figur 12 längs der Linie XIII-XIII in
Figur 12.

In den Figuren der Zeichnung sind gleiche oder ähnliche
Teile jeweils mit denselben Bezugszeichen versehen.

Unter Bezugnahme auf Figur 1 ist schematisch eine Druckgasanlage als Anwendungsbeispiel gezeigt. Bei dieser
Druckgasanlage wird über einen Filter 1 und einen Ansaugregler 2 als Gas Luft angesaugt und in einen Kompressor
3, wie einen Schraubenkompressor, eingeleitet. Im Kompressor 3 wird die Luft verdichtet, wobei zur Schmierung des Kompressors 3 als Flüssigkeit Öl zugeleitet wird, die sich nebelartig mit der komprimierten Luft im Kompressor 3 vermischt. Der so im Kompressor 3 komprimierte Fluidstrom, der Öl und Luft enthält, wird einem insgesamt mit 4 bezeichneten Abscheidersystem zugeleitet, in dem das Öl als Flüssigkeit von dem Fluidstrom so weit wie möglich getrennt wird. Das hierbei abgeschiedene Öl wird vom Flüssigkeitssammelraum des Abscheidersystems 4 in Form eines Kreislaufs zum Kompressor 3 zurückgeführt. Das gereinigte und weitgehend von Öl befreite Gas, d.h. die Luft, wird aus dem Abscheidersystem 4 abgezogen und über ein Minimum-Druckhalte- und Rückschlagventil 5 zum Verbraucher geleitet.

Als Beispiel für ein Abscheidersystem 4 ist in Figur 2 ein üblicher Fluidabscheider gezeigt, der insgesamt mit 6 bezeichnet ist. Wie mit einem Pfeil dargestellt ist, tritt der aus einem Luft/Öl-Gemisch bestehende Fluidstrom, der vom Kompressor 3 nach Figur 1 kommt, über einen Fluideinlaß 7 in den Fluidabscheider 6 ein und wird auf eine horizontal im Fluidabscheider 6 angeordnete Prallplatte 8 gerichtet, die eine Grobabscheideeinrichtung 9 bildet. Die Prallplatte 8 ist im Fluidabscheider 6 etwa mittig angeordnet und an der Oberseite derselben ist eine Feinabscheideeinrichtung 10 vorgesehen, die zweckmäßigerweise von einer zylindermantelförmigen Feinabscheiderpatrone 11 gebildet wird, die einen hohlen Innenraum 12 enthält, der von einem Mantel 13 umgeben ist, der beispielsweise ein Vlies oder dergleichen ist. Ebenfalls etwa mittig ist an der Oberseite des Fluidabscheiders 6 ein Gasauslaß 14 vorgesehen, über den als Gas die im Fluidabscheider 6 behandelte Luft zu einem nachgeschalteten und nicht näher dargestellten Verbraucher austritt. Dieser Gasauslaß 14 ist in Verbindung mit dem Innenraum 12 der Feinabscheideeinrichtung 10. Im Bereich des Bodens des Fluidabscheiders 6 wird ein Flüssigkeitssammelraum 15 gebildet, in dem sich die abgeschiedene Flüssigkeit, wie das Öl, sammelt, das über einen Flüssigkeitsauslaß 16 abgesaugt wird und im Kreislauf entsprechend Figur 1 zum Kompressor 3 zurückgeführt wird. Mittels eines Deckels 17 ist der Fluidabscheider 6 druckdicht verschlossen.

In Figur 2 ist mit Pfeilen die Fluiddurchströmung durch den Fluidabscheider 6 angedeutet. Beim Auftreffen des Fluidstromes auf die Prallplatte 8 werden mitgerissene Flüssigkeitströpfchen, wie Öltröpfchen, abgeschieden und tropfen von der Unterseite der Prallplatte in den Flüssigkeitssammelraum 15. Die Fluidströmung, die die Grobabscheideeinrichtung 9 verläßt, wird durch die Prallplatte 8 in Richtung zur Wand des Fluidabscheiders 6 radial abgelenkt und steigt längs der Feinabscheideeinrichtung 10 nach oben und geht durch den aus Vlies beispielsweise bestehenden Mantel 13 der Feinabscheideeinrichtung 10 in den Innenraum 12 derselben. Die mittels der Feinabscheideeinrichtung 10 abgeschiedene Flüssigkeit tropft vom Außenrand der Prallplatte 8 in den Flüssigkeitssammelraum 15. Somit kreuzt der durch die Prallplatte 8 umgelenkte Fluidstrom die abtropfende Flüssigkeit, die an der Grobabscheideeinrichtung 9 und der Feinabscheideeinrichtung 10 abgeschieden worden ist. Um ein zu starkes Mitreißen dieser bereits abgeschiedenen und abtropfenden Flüssigkeit durch den Fluidstrom zu verhindern, muß dieser Fluidstrom sehr stark verlangsamt werden, wozu es erforderlich ist, daß die Innenabmessungen des Fluidabscheiders 6 groß gewählt werden. Hierdurch ergibt sich nicht nur ein sperriger Aufbau eines solchen Fluidabscheiders 6, sondern er hat auch ein großes Gewicht und der Flüssigkeitsabscheidewirkungsgrad ist nicht in jedem Fall zufriedenstellend.

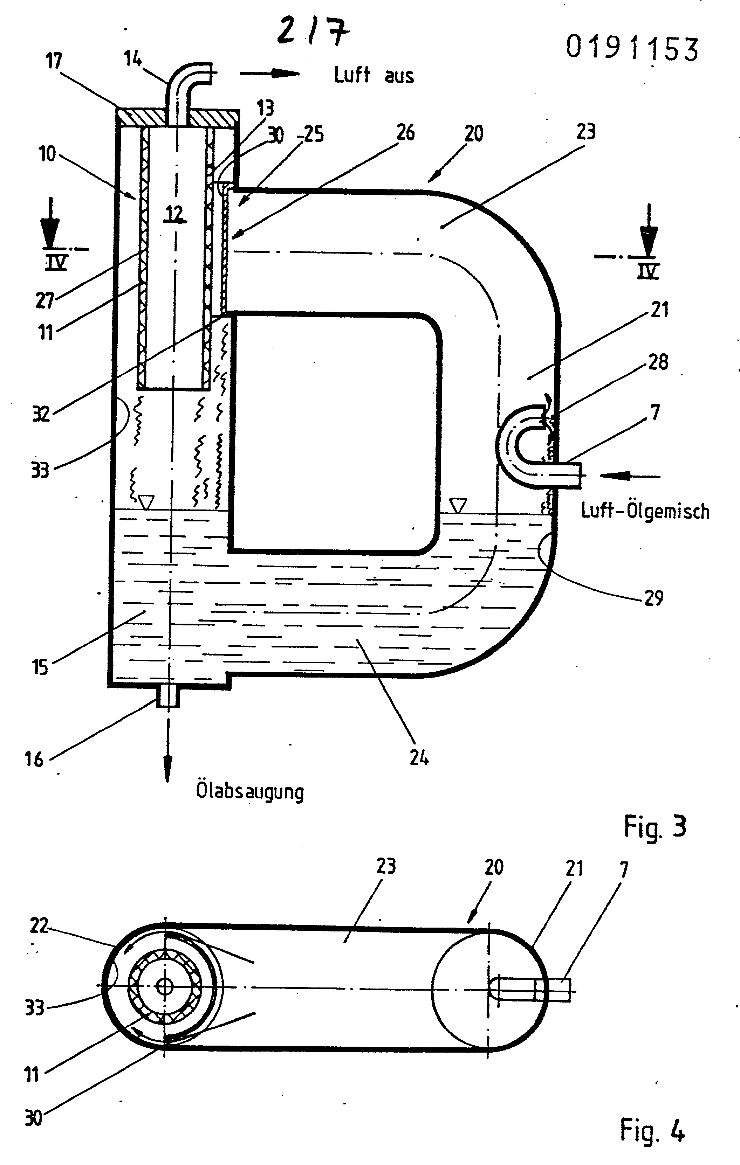

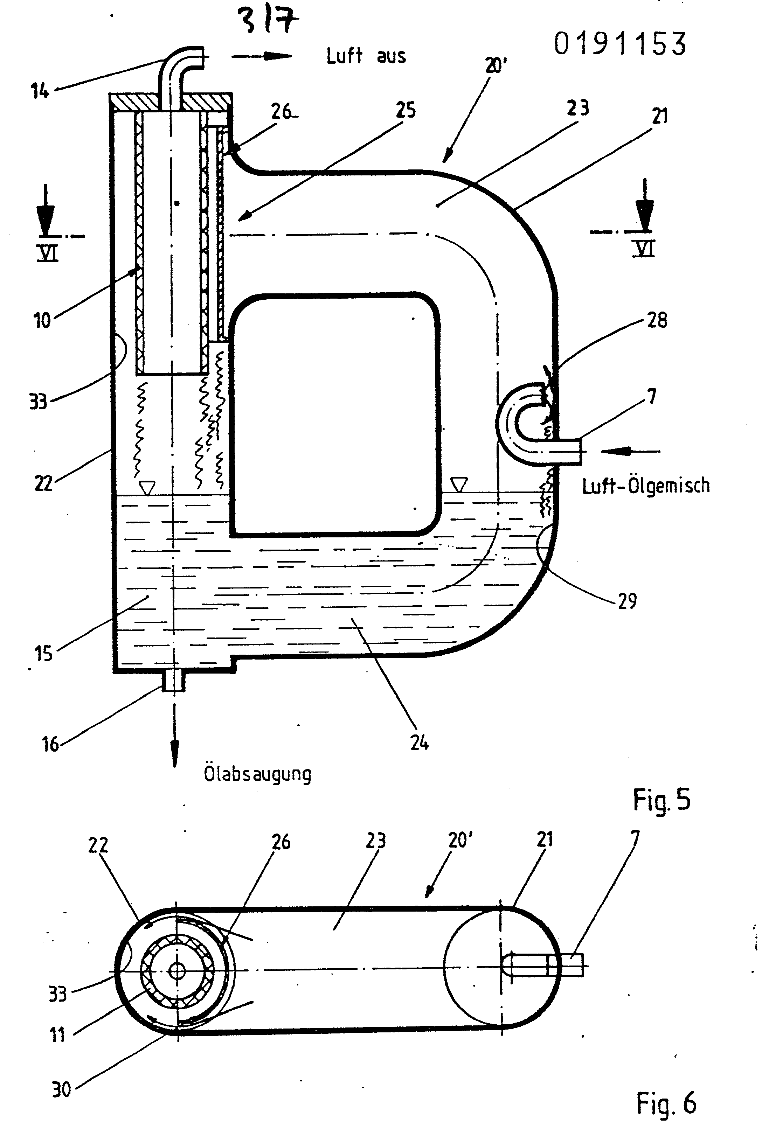

Anhand den Figuren 3 und 4 wird eine erste Ausführungsform eines erfindungsgemäßen Fluidabscheiders erläutert, der insgesamt mit 20 bezeichnet ist. Dieser Fluidabscheider 20 umfaßt einen ersten Hohlzylinder 21, in dem die Grobabscheideeinrichtung 9 angeordnet ist, und einen zweiten hierzu parallel nebeneinanderliegend angeordneten Hohlzylinder 22, der die Feinabscheideeinrichtung 10 in Form einer Feinabscheiderpatrone 11 enthält. Die oberen und unteren Enden der beiden Hohlzylinder 21, 22, die vorzugsweise von Rohrstücken gebildet werden, sind über Zwischenabschnitte 23, 24 in Form eines kommunizierenden Röhrensystems miteinander verbunden. Im Einmündungsbereich 25 des Zwischenabschnitts 23 ist eine Fluidleiteinrichtung 26 angeordnet, die in Fluidströmungsrichtung durch den Fluidabscheider 20 zwischen der Grobabscheideeinrichtung 9 und der Feinabscheideeinrichtung 10 liegt. Diese Fluidleiteinrichtung 26 ist in einem Abstand von der Außenfläche 27 der Feinabscheideeinrichtung 10 angeordnet. Die Fluidleiteinrichtung 26 ist derart angeordnet, daß der von der Grobabscheideeinrichtung 9 kommende Fluidstrom im ersten Hohlzylinder 21 aufsteigt und über den Zwischenabschnitt 23 auf die Fluidleiteinrichtung gerichtet wird, wobei durch das Auftreffen Flüssigkeit aus dem Fluidstrom abgetrennt wird, die von der Unterseite der Fluidleiteinrichtung 26 in den Flüssigkeitssammelraum 15 tropft. Gleichzeitig beschleunigt die Fluidleiteinrichtung 26 den Fluidstrom vor dem Erreichen der Feinabscheideeinrichtung 10 und sie lenkt den Fluidstrom von der abgeschiedenen Flüssigkeit weg. Hierdurch wird wirksam verhindert, daß der Fluidstrom vor dem Erreichen der Feinabscheideeinrichtung 10 nochmals bereits abgeschiedene Flüssigkeit wieder mitreißen kann. Ein mit 28 bezeichneter Bereich der Innenwand 29 des ersten Hohlzylinders 21 bildet bei dieser Ausführungsform die Grobabscheideeinrichtung 9, so daß man im Vergleich zum Stand der Technik hierfür kein gesondertes Bauteil benötigt. Der Einmündungsbereich 25 des Zwischenabschnitts 23 liegt wenigstens der oberen Hälfte der Feinabscheideeinrichtung 10 gegenüber, die Fluidleiteinrichtung 26 nach den Figuren 3 und 4 teilt ferner den ankommenden Fluidstrom in zwei radial divergierende Teilströme auf, die vor dem Erreichen der Feinabscheideeinrichtung 10 dadurch zusammengeführt werden, daß sie aufeinander gerichtet und verwirbelt werden. Wie insbesondere aus Figur 4 zu ersehen ist, ist hierzu die Fluidleiteinrichtung 26 in Form eines Bleches 30 ausgebildet, das in einem Abstand von der Feinabscheideeinrichtung 10 konzentrisch um dieselbe angeordnet ist und sich in Form eines Halbkreises in Umfangsrichtung um dieselbe um einen Winkelbereich von etwa 180° erstreckt. Somit ermöglicht die Fluidleiteinrichtung 26 auch eine Intensivierung der Flüssigkeitsabscheidung durch die Feinabscheideeinrichtung 10, so daß sich der Gesamtwirkungsgrad des Fluidabscheiders 20 im Vergleich zu der üblichen Bauform erhöhen läßt.

Wie ferner aus Figur 3 zu ersehen ist, ist der Flüssigkeitsspiegel im Flüssigkeitssammelraum 15, der von den unteren Enden der beiden Hohlzylinder 21 und 22 und dem Zwischenabschnitt 24 gebildet wird, so gewählt, daß im Betriebszustand des Fluidabscheiders 20 immer gewährleistet ist, daß der Zwischenabschnitt 24 vollständig mit Flüssigkeit ausgefüllt ist, so daß dieser Teil eine Flüssigkeitssperre bildet, um zu erreichen, daß der in den Fluidabscheider 20 eingeleitete Fluidstrom vom ersten Hohlzylinder 21 über den Zwischenabschnitt 23, die Fluidleiteinrichtung 26 zu der Feinabscheideeinrichtung 10 geht. Die durch die Feinabscheideeinrichtung 10 abgeschiedene Flüssigkeit tropft von der Unterseite 31 der Feinabscheideeinrichtung 10 in den Flüssigkeitssammelraum 15 ab. Die von der Grobabscheideeinrichtung 9 abgeschiedene Flüssigkeit strömt längs der Innenwand 29 des ersten Hohlzylinders 21 in den Flüssigkeitssammelraum 15. Die im Bereich der Fluidleiteinrichtung 26 abgeschiedene Flüssigkeit tropft vom unteren Rand des Bleches 30 und gegebenenfalls längs der Innenwand 33 des zweiten Hohlzylinders 22 in den Flüssigkeitssammelraum 15. Somit behindern sich wieder die abgeschiedenen Flüssigkeitsströme wechselseitig während ihres Weges zum Flüssigkeitssammelraum 15, noch kreuzen Fluidströme die abgeschiedene Flüssigkeit, so daß man trotz einer gedrängten Bauweise des Fluidabscheiders 20 einen äußerst hohen Abscheidewirkungsgrad für die Flüssigkeit erreicht.

Auch ist der Fluidabscheider 20 relativ einfach herzustellen, da er sich durch mehrere Rohrstücke zusammensetzen läßt, die nach Figur 3 sogar etwa immer den gleichen Durchmesser haben. Hierdurch läßt sich auch auf einfache Weise die notwendige Druckdichtigkeit erzielen.

Bei der in den Figuren 5 und 6 gezeigten abgewandelten Ausführungsform des Fluidabscheiders 20' ist abweichend von der Ausführungsform nach den Figuren 3 und 4 der Einmündungsbereich 25 des Zwischenabschnitts 23 im Querschnitt erweitert, so daß die Fläche der Fluidleiteinrichtung 26 im Vergleich zu der Ausführungsform nach den Figuren 3 und 4 vergrößert werden kann, auf die der Fluidstrom beim Durchgang vom Zwischenabschnitt 23 zum zweiten Hohlzylinder 22 auftreffen kann. Hierdurch kann die Abscheidungswirkung der Fluidleiteinrichtung 26 unter Beibehaltung des erfindungsgemäßen Grundprinzips des Fluidabscheiders 20 bzw. 20' verstärkt werden.

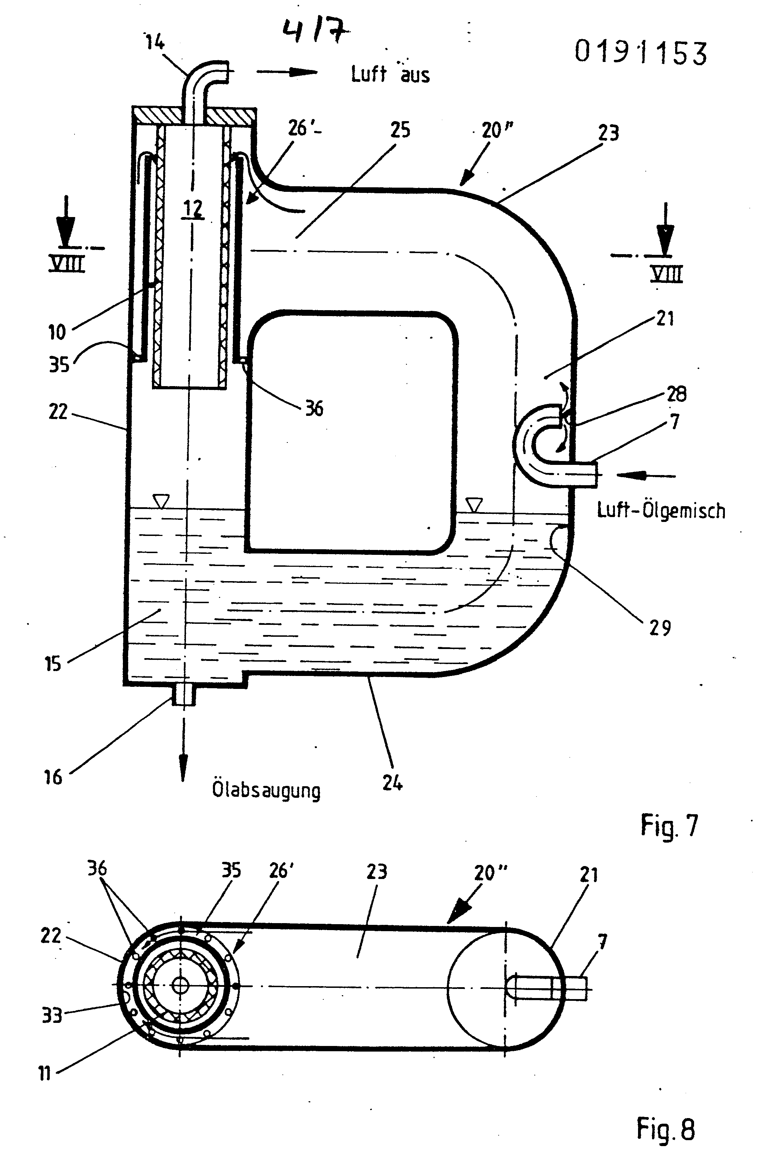

Bei der Ausführungsform des in den Figuren 7 und 8 gezeigten Fluidabscheiders 20" ist in Abweichung von den vorangehenden Ausführungsbeispielen nach der Erfindung die Fluidleiteinrichtung 26 anders ausgebildet und ist dort mit 26' bezeichnet. Die Fluidleiteinrichtung 26' ist in Form eines Ringes 34 ausgebildet, der konzentrisch in einem Abstand um die Außenfläche 27 der Feinabscheideeinrichtung 10 diese umgebend angeordnet ist. Dieser Ring 34 ist mit Hilfe eines Ringflansches 35 an der Innenwand 33 des zweiten Hohlzylinders 22 unterhalb des Einmündungsbereiches 25 des Zwischenabschnitts 23 befestigt. Im Ringflansch 35 sind mehrere Durchlaßöffnungen 36 für die an der Fluidleiteinrichtung 26' abgeschiedene Flüssigkeit vorgesehen, die vorzugsweise in regelmäßigen Winkelabständen im Ringflansch 35 ausgebildet sind.

Diese Fluidleiteinrichtung 26' ermöglicht eine solche Umlenkung des Fluidstromes vor dem Erreichen der Feinabscheideeinrichtung 10, daß der Fluidstrom die Außenfläche 27 der Feinabscheideeinrichtung 10 durch einen Fallstrom, d.h. einen von oben nach unten in Richtung des Flüssigkeitssammelraumes 15 gerichteten Strom, überstreicht, so daß die Verweilzeit des Fluidstromes im Bereich der Feinabscheideeinrichtung 10 verlängert und hierdurch der Abscheidungswirkungsgrad verbessert wird. Auch wird die Abscheidungswirkung der Feinabscheideeinrichtung 10 dadurch verbessert, daß der in der Feinabscheideeinrichtung 10 zu behandelnde Fluidstrom in Gegenrichtung zu dem aus dem Innenraum 12 der Feinabscheideeinrichtung abgesaugten Gasstrom gerichtet ist. Alle weiteren Einzelheiten stimmen weitgehend mit den vorausgehend erläuterten Ausführungsformen überein, so daß sich eine nähere Beschreibung derselben erübrigt.

In den Figuren 9 und 10 ist eine Ausführungsform eines Fluidabscheiders insgesamt mit 20"' bezeichnet. Als Beispiel wird bei dieser Ausführungsform von dem Fluidabscheider 20" nach den Figuren 7 und 8 ausgegangen. Abweichend hiervon wird der im Fluidabscheider 20"' aus dem Innenraum 12 der Feinabscheideeinrichtung 10 abgeleitete Gasstrom nicht über den Deckel 17 an der Oberseite des zweiten Hohlzylinders 20, sondern von der Unterseite der Feinabscheideeinrichtung 10 her abgesaugt. Hierzu ist der Gasauslaß 37 in den Figuren 9 und 10 so ausgebildet, daß er durch den Flüssigkeitssammelraum 15 geht und den Boden 38 des zweiten Hohlzylinders 22 durchsetzt. Diese Ausführungsform der Gasabführung aus dem Innenraum 12 der Feinabscheideeinrichtung 10 läßt sich selbstverständlich auch bei allen vorangehend beschriebenen Ausführungsformen nach der Erfindung und auch den folgenden verwirklichen. Hierdurch soll verdeutlicht werden, daß dank der erfindungsgemäßen Auslegung der Fluidabscheider 20, 20', 20" ohne weiteres in Abhängigkeit von spezifischen Erfordernissen abgeändert und unter Berücksichtigung von den Gegebenheiten einer entsprechenden Druckgasanlage an örtliche Gegebenheiten derselben angepaßt werden kann, ohne daß der prinzipielle Grundaufbau verändert zu werden braucht.

In Figur 11 ist eine alternative Ausführungsform eines Fluidabscheiders insgesamt mit 40 bezeichnet. Hierbei ist die Grobabscheideeinrichtung 9 als baulich gesonderte Vorabscheideeinrichtung 41 ausgebildet und kann irgendeine übliche Bauform, wie einen Zyklon-Abscheider, haben. Die Vorabscheideeinrichtung 41 ist mit der Feinabscheideeinrichtung 10 über Verbindungsleitungen 42 und 43 verbunden, wobei die Verbindungsleitung 43 den Flüssigkeitssammelraum der Vorabscheideeinrichtung 41 mit dem Flüssigkeitssammelraum der Feinabscheideeinrichtung 10 verbindet. Die Verbindungsleitung 42 verbindet die Vorabscheideeinrichtung 41 mit der Fluidleiteinrichtung 26, die im Bereich des Fluideintritts in die Feinabscheideeinrichtung 10 vorgesehen ist. Diese Fluidleiteinrichtung 26 kann entsprechend den vorangehenden Ausführungsformen zur Erfüllung des nach der Erfindung angestrebten Zwecks ausgebildet sein und in entsprechender Weise abgeändert werden. Eine solche Auslegung ermöglicht, daß die Abmessungen der Vorabscheideeinrichtung 41 und der Feinabscheideeinrichtung 10 entsprechend den jeweils notwendigen Erfordernissen gewählt werden können und beide Abscheideeinrichtungen 41, 10 können in entsprechender Weise über Verbindungsleitungen 42, 43 verbunden werden.

In den Figuren 12 und 13 ist eine weitere Ausführungsvariante eines Fluidabscheiders 50 gezeigt, bei dem unter Verwirklichung des erfindungsgemäßen Grundprinzips die beiden Hohlzylinder 21, 22 konzentrisch ineinander geschachtelt angeordnet sind, um eine möglichst gedrängte Bauweise zu erreichen. Auch bei dieser Ausführungsform des Fluidabscheiders 50 ist eine Fluidleiteinrichtung 26" dargestellt, die dieselbe Aufgabe wie die vorstehend erörterten Fluidleiteinrichtungen 26, 26' hat und ebenfalls im Fluidstrom durch den Fluidabscheider 50 zwischen dem ersten Hohlzylinder 21 für die Grobabscheideeinrichtung und dem zweiten Hohlzylinder 22 für die Feinabscheideeinrichtung 10 angeordnet ist.

Auch der Gesamtaufbau ist bei dem Fluidabscheider 50 nach den Figuren 12 und 13 einfach, wobei sogar auch eine konzentrische Rohranordnung für den Austritt von abgeschiedener Flüssigkeit und das Ableiten des im Fluidabscheider 50 behandelten Gases verwendet werden kann.

Selbstverständlich sind im Rahmen der Erfindung noch weitere Abänderungen möglich und insbesondere lassen sich einzelne Merkmale der vorstehend beschriebenen Ausführungsformen auf die verschiedenste Weise mit den jeweiligen Ausführungsvarianten des Fluidabscheiders kombinieren.

# Dr. D. Thomsen

# W. Weinkauff

# H. Hering

**PATENTANWÄLTE** 0191153

VERTRETER BEIM EUROPÄISCHEN PATENTAMT
EUROPEAN PATENT ATTORNEYS
MANDATAIRES EUROPEENS AGREES

Patentanwälte Dr. Thomsen · Weinkauff · Hering
P.O.Box 7019 29 · 8000 München

Telefon (089) 8 57 37 22          Telex 5 24 303 xpert d
                    8 57 37 99                    cable: **xpertia**
Telecopier/facs. autom. GR III/II 089/8 57 37 24

**D-8000 München**          **Frankfurt/M.:**
**P.O.Box 7019 29**          Dipl.-Ing. W. Weinkauff
Dr. rer. nat. D. Thomsen
Dipl.-Ing. H. Hering

D-8033 Planegg (Kr. München) Bahnhofstraße 7

ROTORCOMP VERDICHTER GmbH

D-8000 München 70, Wolfratshauser Str.34

Fluidabscheider, insbesondere Gas/Flüssigkeit-Abscheider

Patentansprüche

1. Fluidabscheider, insbesondere Gas/Flüssigkeit-Abscheider, wie ein Öl/Luft-Abscheider für eine Druckgasanlage, bei dem über einen Fluideinlaß (7) ein zu behandelnder Fluidstrom eintritt, auf eine Pralleinrichtung (8, 28) einer Grobabscheideeinrichtung (9, 41) auftrifft und durch eine Feinabscheideeinrichtung (10) geht, wobei aus dem Fluidstrom abgeschiedene Flüssigkeit sich in einem Flüssigkeitssammelraum (15) sammelt und über einen Flüssigkeitsauslaß (16) austritt, und der Gasstrom aus dem Innenraum (12) der Feinabscheideeinrichtung (10) über einen Gasauslaß (14, 37) austritt, g e k e n n z e i c h -
n e t durch eine in Fluidströmungsrichtung zwischen
der Grobabscheideeinrichtung (9, 41) und der Feinabscheideeinrichtung (10) angeordnete Fluidleiteinrichtung (26, 26', 26"), auf die der Fluidstrom vor
dem Erreichen der Feinabscheideeinrichtung (10) auftrifft, die denselben beschleunigt und von der abgeschiedenen Flüssigkeit weglenkt.

2. Fluidabscheider nach Anspruch 1, dadurch g e k e n n -
z e i c h n e t, daß die Fluidleiteinrichtung (26,
26', 26") den Fluidstrom in Teilfluidströme aufteilt,
die sich vor der Feinabscheideeinrichtung (10) wieder
vereinigen.

3. Fluidabscheider nach Anspruch 2, dadurch g e k e n n -
z e i c h n e t, daß die Fluidleiteinrichtung (26)
den Fluidstrom in zwei radial divergierende Teilströme
unterteilt, die im Vereinigungsbereich aufeinander gerichtet sind.

4. Fluidabscheider nach einem der Ansprüche 1 bis 3, dadurch g e k e n n z e i c h n e t, daß der Flüssigkeitssammelraum (15) im Bodenbereich des Fluidabscheiders (20, 20', 20", 20"', 40, 50) liegt, die
Feinabscheideeinrichtung (10) in einem Abstand über
dem Flüssigkeitsspiegel im Flüssigkeitssammelraum
(15) angeordnet ist und der Gasauslaß (14) von der
Oberseite (17) der Feinabscheideeinrichtung (10) den
Innenraum (12) derselben absaugt.

5. Fluidabscheider nach einem der Ansprüche 1 bis 3,
dadurch g e k e n n z e i c h n e t, daß der Flüs-

sigkeitssammelraum (15) im Bodenbereich des Fluidabscheiders (20"') liegt, die Feinabscheideeinrichtung (10) in einem Abstand über dem Flüssigkeitsspiegel im Flüssigkeitssammelraum (15) angeordnet
ist und der Gasauslaß (37) von der Unterseite (38)
der Feinabscheideeinrichtung (10) den Innenraum (12)
derselben absaugt und den Flüssigkeitssammelraum (15)
durchsetzend aus dem Fluidabscheider (20"') herausgeführt ist (Figuren 9 und 10).

6. Fluidabscheider nach einem der vorangehenden Ansprüche, dadurch g e k e n n z e i c h n e t, daß
der Fluideinlaß (7) in einen ersten Hohlzylinder (21)
einmündet, in dem die Grobabscheideeinrichtung (9)
angeordnet ist, daß die Feinabscheideeinrichtung (10)
in einem zweiten Hohlzylinder (22) angeordnet ist,
und daß die beiden Hohlzylinder (21, 22) beidseitig
miteinander strömungsleitend verbunden sind.

7. Fluidabscheider nach Anspruch 6, dadurch g e -
k e n n z e i c h n e t, daß ein Bereich (28) der
Innenwand (29) des ersten Hohlzylinders (21) die
Pralleinrichtung der Grobabscheideeinrichtung (9)
bildet.

8. Fluidabscheider nach Anspruch 6 oder 7, dadurch g e -
k e n n z e i c h n e t, daß die beiden Hohlzylinder
(21, 22) in einem Abstand voneinander angeordnet sind,
daß zur strömungsleitenden Verbindung die Enden beider Hohlzylinder (21, 22) über hohle Zwischenabschnitte (23, 24, 42, 43) verbunden sind, daß der
Flüssigkeitsspiegel im Flüssigkeitssammelraum (15)
derart hoch ist, daß der die beiden unteren Enden
verbindende Zwischenabschnitt (23, 43) immer mit Flüs-

- 4 -

0191153

sigkeit gefüllt ist, und daß die Fluidleiteinrichtung (26, 26', 26") am Einmündungsbereich (25) des die oberen Enden der beiden Hohlzylinder (21, 22) verbindenden Zwischenabschnitts (23) in den zweiten Zylinder (22) der Feinabscheideeinrichtung (10) gegenüberliegend angeordnet ist.

9. Fluidabscheider nach Anspruch 8, dadurch g e - k e n n z e i c h n e t, daß der Einmündungsbereich (25) wenigstens der oberen Hälfte der Feinabscheideeinrichtung (10, 11) gegenüberliegt.

10. Fluidabscheider nach einem der Ansprüche 6 bis 9, dadurch g e k e n n z e i c h n e t, daß die Fluidleiteinrichtung (26) ein im Abstand von der Feinabscheideeinrichtung (10) konzentrisch um dieselbe angeordnetes Blech (30) ist und sich in Umfangsrichtung um einen Winkelbereich von wenigstens 180° erstreckt.

11. Fluidabscheider nach einem der Ansprüche 8 bis 10, dadurch g e k e n n z e i c h n e t, daß der Einmündungsbereich (25) des die oberen Enden der Hohlzylinder (21, 22) verbindenden Zwischenabschnitts (23) in den zweiten Hohlzylinder (22) im Querschnitt erweitert ist (Figuren 5 und 6).

12. Fluidabscheider nach Anspruch 8, 9 oder 11, dadurch g e k e n n z e i c h n e t, daß die Fluidleiteinrichtung (26') in Form eines Ringes (34) um die Feinabscheideeinrichtung (10) derart angeordnet ist, daß der Fluidstrom die Außenfläche (27) der Feinabscheideeinrichtung (10) im Fallstrom überstreicht und daß sie an ihrem tiefer liegenden Ende an der Innenwand (33) des zweiten Hohlzylinders (22) befestigt ist.

13. Fluidabscheider nach Anspruch 12, dadurch g e - k e n n z e i c h n e t, daß zur Befestigung ein Ringflansch (35) vorgesehen ist, der in regelmässigen Abständen mehrere Durchlaßöffnungen (36) für die abgeschiedene Flüssigkeit hat.

14. Fluidabscheider nach einem der Ansprüche 8 bis 13, dadurch g e k e n n z e i c h n e t, daß die Zwischenabschnitte (23, 24) und die beiden Hohlzylinder (21, 22) etwa die gleichen Innendurchmesser haben.

15. Fluidabscheider nach einem der Ansprüche 8 bis 13, dadurch g e k e n n z e i c h n e t, daß die Zwischenabschnitte (23, 24, 42, 43) im Innendurchmesser kleiner als der Innendurchmesser der Hohlzylinder (21, 22) sind, und daß gegebenenfalls auch der erste Hohlzylinder (21) einen kleineren Innendurchmesser als der zweite (22) hat, der aber größer als der Innendurchmesser der Zwischenabschnitte (23, 24, 42, 43) ist.

16. Fluidabscheider nach einem der Ansprüche 1 bis 13, dadurch g e k e n n z e i c h n e t, daß die Grobabscheideeinrichtung (9) als gesonderte Vorabscheideeinrichtung (41) ausgebildet ist und über Verbindungsleitungen (41 und 42) mit der Fluidleiteinrichtung (26, 26', 26") der Feinabscheideeinrichtung (10) und dem Flüssigkeitssammelraum (15) der Feinabscheideeinrichtung (10) verbunden ist (Figur 11).

17. Fluidabscheider nach einem der Ansprüche 1 bis 7, dadurch g e k e n n z e i c h n e t, daß die beiden Hohlzylinder (21, 22) konzentrisch angeordnet sind und die Fluidleiteinrichtung (26, 26', 26")
im Übertrittsbereich von äußerem zu innerem Hohlzylinder (21, 22) angeordnet ist und gemäß einem
der Ansprüche 9, 10, 12 oder 13 ausgebildet ist
(Figuren 12 und 13).

1/7

0191153

Fig.1

Luft aus

Luft-Ölgemisch

Ölabsaugung

Fig. 2

217

0191153

Luft aus

Luft-Ölgemisch

Ölabsaugung

Fig. 3

Fig. 4

317

0191153

Luft aus

Luft-Ölgemisch

Ölabsaugung

Fig. 5

Fig. 6

0191153

Luft aus

Luft-Ölgemisch

Ölabsaugung

Fig. 7

Fig. 8

517

0191153

Luft-Ölgemisch

Luft aus

Ölabsaugung

Fig. 9

Fig. 10

G17

Fig.11

Fig. 12

Fig. 13